# EUROPÄISCHE PATENTANMELDUNG

(11) **EP 4 403 414 A1**
(43) Veröffentlichungstag der Anmeldung: **24.07.2024**
(21) Anmeldenummer: 23211359.7
(22) Anmeldetag: 22.11.2023
(51) Int. Cl.: B60P 1/02, B62D 63/02

(54) **SYSTEM UND VERFAHREN ZUM AUSGLEICH VON HYDRAULIKFLÜSSIGKEIT SOWIE SCHWERLAST-TRANSPORTFAHRZEUG**

(30) Priorität: 20.01.2023 DE 102023200427
(71) Anmelder: Scheuerle Fahrzeugfabrik GmbH, 74629 Pfedelbach (DE)
(72) Erfinder: Krasser, Marco, 74626 Bretzfeld (DE); Mugele, Ulrich, 74629 Pfedelbach (DE); Weiß, Martin, 74635 Kupferzell (DE); Schilling, Markus, 74172 Neckarsulm (DE)
(74) Vertreter: Ullrich & Naumann PartG mbB

(57) **Zusammenfassung**

Ein System zum Ausgleich von Hydraulikflüssigkeit (3) für eine Antriebseinheit (22) eines Schwerlast-Transportfahrzeugs (23), insbesondere eines modularen Schwerlast-Transportfahrzeugs (23), mit einer Steuereinheit (1) und einem Flüssigkeitstank (2) mit mindestens einem Füllstandsensor (4), wobei an dem Flüssigkeitstank (2) mindestens eine Hydraulikleitung zur Herstellung einer Hydraulikverbindung mit der Antriebseinheit (22) angeordnet ist und wobei eine über die Steuereinheit (1) betätigbare Pumpeinrichtung (11) zur Förderung von Hydraulikflüssigkeit (3) durch die Hydraulikleitung angeordnet ist. Des Weiteren sind ein Verfahren zum Ausgleich von Hydraulikflüssigkeit (3) sowie ein Schwerlast-Transportfahrzeug (23) beschrieben.

## Beschreibung

Die Erfindung betrifft ein System zum Ausgleich von Hydraulikflüssigkeit für eine Antriebseinheit eines Schwerlast-Transportfahrzeugs, insbesondere eines modularen Schwerlast-Transportfahrzeugs.

Des Weiteren betrifft die Erfindung ein Verfahren zum Ausgleich von Hydraulikflüssigkeit für eine Antriebseinheit eines Schwerlast-Transportfahrzeugs, insbesondere für ein modulares Schwerlast-Transportfahrzeug.

Weiterhin betrifft die Erfindung ein Schwerlast-Transportfahrzeug, insbesondere modulares Schwerlast-Transportfahrzeug.

Einige Schwerlast-Transportfahrzeuge verfügen über eine hydraulische Abstützung. Dies sind hydraulische Zylinder im Fahrwerk, welche zu Gruppen zusammengeschaltet werden können. Durch die hydraulische Abstützung kann die Fahrzeughöhe variiert, Bodenunebenheiten ausgeglichen und die Last verteilt werden. Die Höhe der Schwerlast-Transportfahrzeuge wird durch das Verändern der Menge der Hydraulikflüssigkeit bzw. des Hydrauliköls in der hydraulischen Abstützung angepasst. Mit der Änderung der Fahrzeughöhe kann somit zum Beispiel Ladung aufgenommen oder abgesetzt werden. Zum Verändern der Ölmenge in der hydraulischen Abstützung ist ein Hydrauliköltank als Reservoir notwendig. Dieser ist üblicherweise in einer Antriebseinheit verbaut, welche auch die notwendige hydraulische Energie zur Verfügung stellt, um das Fahrzeug zu heben oder zu senken.

Die im Hydrauliköltank verbleibende Menge an Hydrauliköl ändert sich dabei mit der Ölmenge in der hydraulischen Abstützung. Wird das Fahrzeug ganz angehoben, so ist die Ölmenge in der Abstützung maximal und im Hydrauliköltank minimal. Ist das Fahrzeug komplett abgesenkt, so kehrt sich dies um. Der Unterschied zwischen ganz angehobenem und ganz abgesenktem Fahrzeug im Hydrauliköltank wird als Pendelvolumen bezeichnet. Handelt es sich um modulare Schwerlast-Transportfahrzeuge, bei denen die Anzahl der im System befindlichen Hydraulikzylinder in Abhängigkeit der miteinander verbundenen Module variieren, so variiert auch das benötigte Pendelvolumen mit der Anzahl der Hydraulikzylinder in der Abstützung.

Das benötigte Pendelvolumen kann dabei das nutzbare Volumen des Hydrauliköltanks übersteigen. Ist dies der Fall, so kann es beim Heben des Fahrzeugs vorkommen, dass zu wenig Öl im Hydrauliköltank ist und dieses nicht mehr ausreichend versorgt wird. Beim Senken des Fahrzeuges kann es sein, dass zu viel Öl im Hydrauliköltank ist und dieser überläuft.

Für ein größeres Pendelvolumen für die hydraulische Abstützung sind aus der Praxis unterschiedliche Ansätze denkbar.

Es kann ein weiterer externer hydraulischer Öltank mit dem in der modularen Antriebseinheit integrierten über eine hydraulische Leitung verbunden werden. Der Ausgleich zwischen integriertem und externem Öltank erfolgt nur über den hydrostatischen Druck. Dabei ist jedoch problematisch, dass die Platzierung des externen Öltanks nur in der direkten Umgebung der modularen Antriebseinheit möglich ist. Bei entfernter Platzierung sind Längs- und Querneigung der Kombination sehr eingeschränkt, da sonst der Hydrauliktank überläuft. Außerdem macht dies die Antriebseinheit, je nach Anbauort, länger oder breiter. Dies kann an Stellen mit Durchfahrtbeschränkungen oder Gefällen problematisch sein.

Ebenfalls möglich ist es, den Füllstand des, in der modularen Antriebseinheit integrierten, Hydrauliköltanks manuell anzupassen. Hierzu würde Hydrauliköl in einen externen Behälter abgelassen und später bei Bedarf wieder zurückgepumpt. Dies ist jedoch zeitaufwändig, führt zu unnötigen Wartezeiten und Unterbrechung von Arbeitsabläufen und erhöht die Gefahr die Umwelt mit Hydrauliköl zu belasten.

Aus der Praxis ist es bekannt, eine zusätzliche modulare Antriebseinheit anzukuppeln. Diese wird unter Umständen nur wegen des zusätzlichen Pendelvolumens benötigt. Dabei verteilt sich die Antriebsleistung auf die modularen Antriebseinheiten. Dies führt zu einer geringeren Auslastung der einzelnen Antriebseinheiten. Die zusätzliche Antriebseinheit stellt hohe Kosten sowohl in der Anschaffung als auch im Unterhalt dar. Da heutige modulare Antriebseinheiten überwiegend mit Dieselmotoren betrieben werden, kann dies durch die geringere Auslastung zu unnötigen Wartezeiten und Unterbrechung von Arbeitsabläufen wegen einer Stillstandsregeneration der Dieselmotoren führen.

Insgesamt besteht somit im Schwerlastbereich je nach Konfiguration für den Einsatzfall ein unterschiedlicher Bedarf, die Fahrzeuge in ihrer Höhe anzupassen sowie Bodenunebenheiten auszugleichen. Hierfür ist es erforderlich das verfügbare Pendelvolumen an Hydrauliköl der Fahrzeugkonfiguration und dem Einsatzfall anzupassen. Geeignete Systeme, welche niedrige Kosten, Flexibilität und Betriebssicherheit vereinen, sind derzeit nicht verfügbar.

Der vorliegenden Erfindung liegt daher die Aufgabe zugrunde, ein System und ein Verfahren zum Ausgleich von Hydraulikflüssigkeit für eine Antriebseinheit derart auszugestalten und weiterzubilden, dass mit konstruktiv einfachen Mitteln das Pendelvolumen zuverlässig anpassbar ist. Des Weiteren soll ein verbessertes Schwerlast-Transportfahrzeug angegeben werden.

Erfindungsgemäß wird die voranstehende Aufgabe in Bezug auf das System durch die Merkmale des Anspruches 1 gelöst. Damit ist ein System zum Ausgleich von Hydraulikflüssigkeit für eine Antriebseinheit eines Schwerlast-Transportfahrzeugs, insbesondere eines modularen Schwerlast-Transportfahrzeugs, beansprucht, mit einer Steuereinheit und einem Flüssigkeitstank mit mindestens einem Füllstandsensor, wobei an dem Flüssigkeitstank mindestens eine Hydraulikleitung zur Herstellung einer Hydraulikverbindung mit der Antriebseinheit angeordnet ist und wobei eine über die Steuereinheit betätigbare Pumpeinrichtung zur Förderung von Hydraulikflüssigkeit durch die Hydraulikleitung angeordnet ist.

In Bezug auf das Verfahren wird die voranstehende Aufgabe durch die Merkmale des Anspruches 9 gelöst. Damit ist ein Verfahren zum Ausgleich von Hydraulikflüssigkeit für eine Antriebseinheit eines Schwerlast-Transportfahrzeugs, insbesondere für ein modulares Schwerlast-Transportfahrzeug, unter Nutzung eines Systems nach einem der Ansprüche 1 bis 8 beansprucht, wobei Hydraulikflüssigkeit über eine Hydraulikleitung in den Flüssigkeitstank eingeleitet wird, wenn der von dem Füllstandsensor ermittelte Füllstand unter einem Mindestfüllstand liegt und/oder wenn die Aufnahme von Hydraulikflüssigkeit über eine Schnittstelle angefordert wird, und wobei Hydraulikflüssigkeit über eine Hydraulikleitung aus dem Flüssigkeitstank ausgeleitet wird, wenn der von dem Füllstandsensor ermittelte Füllstand über einem Höchstfüllstand liegt und/oder wenn Hydraulikflüssigkeit über eine Schnittstelle angefordert wird.

In Bezug auf das Schwerlast-Transportfahrzeug wird die voranstehende Aufgabe durch die Merkmale des Anspruchs 10 gelöst. Damit ist ein Schwerlast-Transportfahrzeug, insbesondere modulares Schwer-Transportfahrzeug, mit einem System nach einem der Ansprüche 1 bis 8 beansprucht.

In erfindungsgemäßer Weise ist erkannt worden, dass die bekannten Systeme zu hohe Kosten in Anschaffung und Unterhalt erzeugen, keine flexible Platzierung ermöglichen, zu unnötigen Wartezeiten und Unterbrechung von Arbeitsabläufen führen und nicht gegen Überfüllung bzw. Unterversorgung geschützt sind. Durch die erfindungsgemäße Lehre werden diese Probleme in verblüffend einfacher Weise gelöst. Das System ermöglicht es, das Pendelvolumen bei weit geringeren Kosten als eine zusätzliche modulare Antriebseinheit zu vergrößern. Da das Fluidniveau des Flüssigkeitstanks geregelt werden kann, ist dieser gegen Unterversorgung und Überfüllung geschützt und kann dabei frei platziert werden. Im Konkreten kann Hydraulikflüssigkeit von der Antriebseinheit in den Flüssigkeitstank gefördert werden, wenn dessen Füllstand zu gering ist und Hydraulikflüssigkeit, beispielsweise Hydrauliköl, von dem Flüssigkeitstank in die Antriebseinheit gefördert werden, wenn dessen Füllstand zu hoch ist.

Damit ergeben sich keine Einschränkungen bei der Durchfahrt oder Gefällen und es fallen keine unnötigen Wartezeiten oder Unterbrechungen von Arbeitsabläufen an. Weiterhin wird die in der Konfiguration des Schwerlast-Transportfahrzeugs befindliche modulare Antriebseinheit besser ausgelastet und sind die Betriebs- und Wartungskosten dabei für das System minimal.

Gemäß einer vorteilhaften Ausgestaltung kann es sich bei der Steuereinheit um ein elektronisches Steuergerät, einen Computer oder eine Mechanik handeln. Wesentlich ist, dass die Steuereinheit dazu ausgebildet ist, unter Berücksichtigung des von dem Flüssigkeitssensor bestimmten Fluidniveaus innerhalb des Flüssigkeitstanks die Zuleitung bzw. Ableitung von Hydraulikflüssigkeit zu steuern bzw. zu regeln.

Bei dem Flüssigkeitssensor kann es sich in vorteilhafter Weise um einen elektronischen Niveausensor, einen optischen Sensor, einen Schwimmer oder einen beliebigen anderen Sensor handeln, der die Bestimmung der Höhe des Flüssigkeitsniveaus in dem Flüssigkeitstank ermöglicht.

In vorteilhafter Weise können eine erste Hydraulikleitung zur Förderung von Hydraulikflüssigkeit von der Antriebseinheit in den Flüssigkeitstank und eine zweite Hydraulikleitung zur Förderung von Hydraulikflüssigkeit von dem Flüssigkeitstank zu der Antriebseinheit angeordnet sein. Dabei ist es denkbar und von Vorteil, wenn die erste Hydraulikleitung und die zweite Hydraulikleitung in eine gemeinsame Hydraulikleitung münden, die mit dem Flüssigkeitstank verbunden ist. Somit ist lediglich eine einzige Fluidverbindung an dem Flüssigkeitstank auszubilden, über welche die Zuleitung und Abführung von Hydraulikflüssigkeit erfolgt. Es ist jedoch auch möglich, dass die erste und die zweite Hydraulikleitung jeweils in den Flüssigkeitstank münden.

In weiter vorteilhafter Weise kann die Pumpeinrichtung mit der zweiten Hydraulikleitung wirkverbunden sein. Somit wird die Pumpeinrichtung genutzt, um Hydraulikflüssigkeit aus dem Flüssigkeitstank zu der Antriebseinheit zu fördern. Dabei könnte die Zuleitung der Hydraulikflüssigkeit von der Antriebseinheit in den Flüssigkeitstank über die erste Hydraulikleitung vorzugsweise ohne eine zusätzliche Pumpeinrichtung erfolgen, nämlich durch die Druckversorgung der Antriebseinheit. Dadurch wird die Auslastung der Antriebseinheit verbessert und der konstruktive Aufwand und somit die Kosten des Systems verringert.

Gemäß einer vorteilhaften Ausgestaltung können in der ersten Hydraulikleitung ein Ventil und/oder in der zweiten Hydraulikleitung ein Ventil angeordnet sein. Das Ventil der ersten Hydraulikleitung und/oder das Ventil der zweiten Hydraulikleitung können in vorteilhafter Weise über die Steuereinheit betätigbar sein. Durch diese konstruktive Maßnahme ist es möglich, die Füllhöhe des Flüssigkeitstanks zu steuern bzw. automatisch zu regulieren.

In vorteilhafter Weise kann eine Energiequelle zum Betreiben der Pumpeinrichtung angeordnet sein. Somit ist diese unabhängig von äußeren Konstruktionen und kann besonders flexibel positioniert werden. Alternativ kann die Pumpeinrichtung von der Antriebseinheit mit Energie versorgbar sein. Beispielsweise könnte die Antriebseinheit hydraulische Energie oder elektrische Energie liefern, mit welcher die Pumpeinrichtung antreibbar ist. Durch die Möglichkeit der externen Energieversorgung über die Antriebseinheit ist das System besonders kostengünstig realisierbar.

In weiter vorteilhafter Weise kann die Pumpeinrichtung eine Hydropumpe und einen die Hydropumpe antreibbaren Hydromotor aufweisen. Zusätzlich könnte der Hydromotor über eine Hydraulikleitung mit der Antriebseinheit verbindbar sein, so dass der Hydromotor über die Antriebseinheit antreibbar ist. Somit ist auf einfache Weise eine Energieversorgung der Pumpeinrichtung durch die Antriebseinheit geschaffen.

Unabhängig von der Ausgestaltung der Pumpeinrichtung kann diese in vorteilhafter Weise von der Steuereinheit elektrisch, elektronisch oder pneumatisch geschaltet bzw. betätigt werden.

In besonders vorteilhafter Weise kann die Steuereinheit eine Datenverbindung zu dem Füllstandsensor aufweisen. Diese Verbindung kann drahtlos oder drahtgebunden ausgebildet sein. Wesentlich ist, dass die Steuereinheit auf Grundlage des mit Hilfe des Füllstandsensors ermittelten Füllstandes die Zuleitung bzw. Ableitung der Hydraulikflüssigkeit in bzw. aus dem Flüssigkeitstank steuern bzw. regeln kann. Alternativ oder zusätzlich kann eine Schnittstelle zur Herstellung einer Datenverbindung mit der Antriebseinheit an der Steuereinheit ausgebildet sein. Dadurch kann der gemessene Füllstand an die Antriebseinheit übermittelt werden, um diesen beispielsweise dem Benutzer anzuzeigen.

Bei dem Schwerlast-Transportfahrzeug kann es sich generell um ein beliebig ausgebildetes Transportahrzeug für schwere Lasten handeln. Insbesondere kann es sich um ein modulares Schwerlast-Transportfahrzeug handeln, wobei die Module als sog. "self-propelled modular transporter (SPMT)" realisiert sein können. Dabei können mehrere Fahrzeugmodule nebeneinander und/oder hintereinander angeordnet werden, so dass durch eine mechanische Verbindung der einzelnen Fahrzeugmodule ein modular aufgebautes Schwerlast-Transportfahrzeug ausgebildet wird.

In vorteilhafter Weise kann das Schwerlast-Transportfahrzeug eine hydraulische Antriebseinheit mit einem Hydrauliktank und einem Leistungsaggregat sowie eine hydraulische Abstützung zur Variation der Höhe des Schwerlast-Transportfahrzeugs aufweisen. Das Leistungsaggregat könnte als Dieselmotor oder als Elektromotor ausgebildet sein.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 10 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch das erfindungsgemäße Verfahren sowie im Allgemeinen bevorzugte Ausgestaltungen und Weiterbildungen der Lehre erläutert. In der Zeichnung zeigen
- Fig. 1: in einer schematischen Darstellung Ausführungsbeispiel eines erfindungsgemäßen Systems,
- Fig. 2: in einer schematischen Darstellung ein weiteres Ausführungsbeispiel eines erfindungsgemäßen Systems, und
- Fig. 3: in einer schematischen Darstellung ein Ausführungsbeispiel eines erfindungsgemäßen Schwerlast-Transportfahrzeugs.

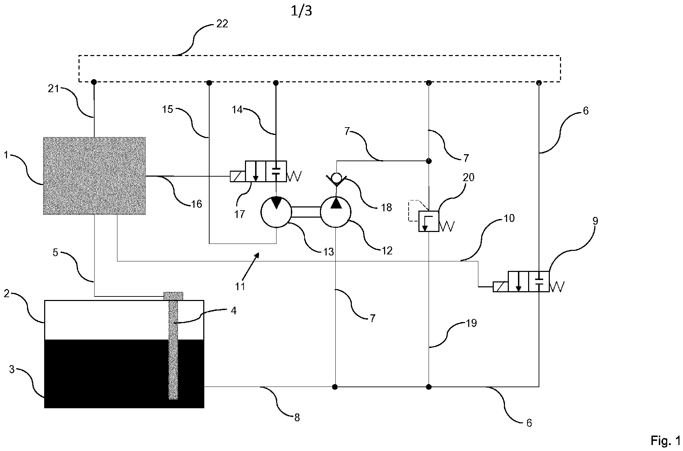

Fig. 1 zeigt ein erstes Ausführungsbeispiel eines erfindungsgemäßen Systems zum Ausgleich von Hydraulikflüssigkeit für eine Antriebseinheit 22 eines Schwerlast-Transportfahrzeugs. Dieses weist eine Steuereinheit 1 und einen Flüssigkeitstank 2 auf. Der Füllstand der Hydraulikflüssigkeit 3 in dem Flüssigkeitstank 2 ist über einen Füllstandsensor 4 messbar, wobei der Füllstandsensor 4 über eine Datenverbindung 5 mit der Steuereinheit 1 verbunden ist, um die Messewerte an die Steuereinheit 1 übertragen zu können.

Des Weiteren sind eine erste Hydraulikleitung 6 zur Förderung von Hydraulikflüssigkeit von der Antriebseinheit 22 in den Flüssigkeitstank 2 und eine zweite Hydraulikleitung 7 zur Förderung von Hydraulikflüssigkeit von dem Flüssigkeitstank 2 zu der Antriebseinheit 22. Dabei ist deutlich zu erkennen, dass die erste und zweite Hydraulikleitung 6, 7 in eine gemeinsame Hydraulikleitung 8 münden, die in den Flüssigkeitstank 2 mündet. Dies muss nicht zwangsweise der Fall sein, könnten die erste und zweite Hydraulikleitung 6, 7 auch jeweils direkt in den Flüssigkeitstank 2 münden.

In der ersten Hydraulikleitung 6 ist ein Ventil 9 angeordnet, das über die Steuereinheit 1 betätigbar ist. Somit kann der Zufluss von Hydraulikflüssigkeit von der Antriebseinheit 22 in den Flüssigkeitstank 2 gesteuert werden, wozu eine entsprechende Steuerverbindung 10 zwischen Steuereinheit 1 und Ventil 9 vorgesehen ist. Um Hydraulikflüssigkeit aus dem Flüssigkeitstank 2 abzuführen ist eine Pumpeinrichtung 11 vorgesehen. Diese weist eine Hydropumpe 12 und einen Hydromotor 13 auf. Der Hydromotor 13 wird über eine hydraulische Zuleitung 14 von der Antriebseinheit 22 mit unter Druck stehendem Fluidum versorgt. Des Weiteren ist eine hydraulische Ableitung 15 vorgesehen, die ebenfalls mit der Antriebseinheit 22 strömungsverbunden ist. Um den Hydromotor 13 anzusteuern, ist ein mit dem Steuereinheit 1 über eine weitere Steuerverbindung 16 angebundenes Ventil 17 an der Zuleitung 14 angeordnet. In Strömungsrichtung gesehen ist der Hydropumpe 12 des Weiteren ein Rückschlagventil 18 nachgeordnet.

Es wird darauf hingewiesen, dass auch andere Konstruktionen für die Pumpeinrichtung 11 denkbar sind, beispielsweise kann eine Pumpe angeordnet sein, die über eine von der Antriebseinheit 22 unabhängige, eigene Energieversorgung betreibbar ist.

Aus Fig. 1 geht des Weiteren hervor, dass die erste Hydraulikleitung 6 und die zweite Hydraulikleitung 7 über eine Bypassleitung 19 miteinander verbunden sind, in der ein Druckbegrenzungsventil 20 ausgebildet ist. Insbesondere, wenn es sich bei der Hydropumpe 12 um eine Pumpe handelt, welche bei Erreichen des Zieldrucks nicht zurückschwenken kann, beispielsweise eine Zahnradpumpe, begrenzt das Druckbegrenzungsventil 20 den Druck im System. Damit wird sichergestellt, dass in der Verbindungsleitung 7 und in Strömungsrichtung gesehen dahinter, der zulässige Druck nicht überschritten wird, beispielsweise, wenn aufgrund eines Bedienfehlers versäumt worden ist, die Leitung 7 zu kuppeln. Somit wird effektiv verhindert, dass die Leitung 7 aufgrund eines zu hohen Drucks beschädigt wird. Weiterhin kann an der Steuereinheit 1 eine Schnittstelle 21 vorgesehen sein, um Daten an die Antriebseinheit 22 zu senden und/oder von dieser zu empfangen.

Ein Verfahren zum Ausgleich von Hydraulikflüssigkeit für eine Antriebseinheit 22 unter Nutzung des in Fig. 1 abgebildeten Systems könnte somit einige oder mehrere der folgenden Schritte aufweisen, wobei diese soweit sinnvoll auch in einer anderen Reihenfolge ausgeführt werden können:
- Ein Benutzer schließt das System an das Schwerlast-Transportfahrzeug, z.B. eine modulare Antriebseinheit 22 an. Dazu wird die zweite Hydraulikleitung 7 für den Rücklauf und die erste Hydraulikleitung 6 für den Zulauf bzw. die Druckversorgung mit der modularen Antriebseinheit 22 verbunden.
- Nach dem Start des Systems überwacht die Steuereinheit 1 über den Füllstandsensor 4 den Füllstand des Flüssigkeitstanks 2. Befindet sich der Füllstand innerhalb des zulässigen Pendelvolumens und wird keine Hydraulikflüssigkeit 3 über die Schnittstelle 21 angefordert, so werden keine Änderungen an dem System vorgenommen.
- Sinkt der Füllstand unter einen zulässigen Pegel oder wird die Aufnahme von Hydraulikflüssigkeit 3 über die Schnittstelle 21 angefordert, so aktiviert die Steuereinheit 1 die Zuschaltung der Verbindung von der ersten Hydraulikleitung 6 zum Flüssigkeitstank 2, indem das Ventil 9 geöffnet wird. Dadurch fließt Hydraulikflüssigkeit in den Flüssigkeitstank 2, so dass der Füllstand steigt. Befindet sich der Füllstand wieder innerhalb des zulässigen Pendelvolumens oder wird die Anforderung gestoppt, so wird die Verbindung durch Schließen des Ventils 9 wieder getrennt.
- Steigt der Füllstand über einen zulässigen Pegel oder wird Hydraulikflüssigkeit 3 angefordert, so aktiviert die Steuereinheit 1 die Zuschaltung des Hydromotors 13. Dieser wird über die Druckversorgung der Zuleitung 14 und die Ableitung 15 von der Antriebseinheit 22 gespeist. Der Hydromotor 13 treibt eine Hydropumpe 12 an. Diese fördert Hydraulikflüssigkeit 3 aus dem Flüssigkeitstank 2 über die zweite Hydraulikleitung 7 zum Tank der Antriebseinheit 22, so dass der Füllstand im Flüssigkeitstank 2 sinkt. Befindet sich der Füllstand wieder innerhalb des zulässigen Pendelvolumens oder wird die Anforderung gestoppt, so wird der Hydromotor 13 und damit die Hydropumpe 12 nicht mehr angesteuert.
- Über die Schnittstelle 21 können Informationen wie z.B. der Füllstand der Antriebseinheit 22 bzw. dem Schwerlast-Transportfahrzeug zur Verfügung gestellt werden.

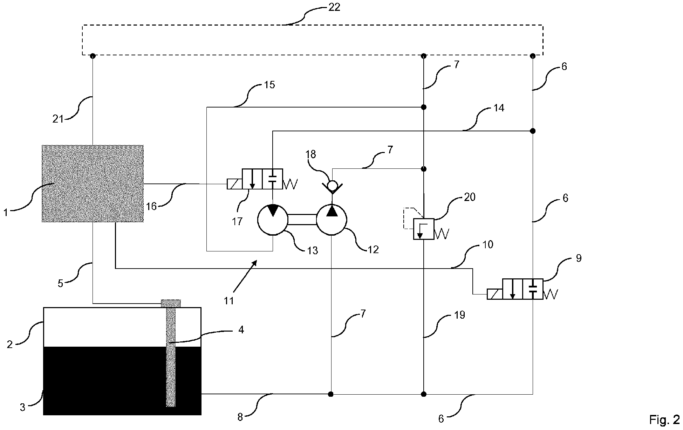

Fig. 2 zeigt ein weiteres Ausführungsbeispiel eines erfindungsgemäßen Systems. Dieses entspricht im Wesentlichen dem Ausführungsbeispiel gemäß Fig. 1, so dass auf die Beschreibung von Fig. 1 verwiesen wird. Im Unterschied zu Fig. 1 ist die Zuleitung 14 mit der ersten Hydraulikleitung 6 und die Ableitung 15 mit der zweiten Hydraulikleitung 7 verbunden, so dass eine besonders kompakte Konstruktion geschaffen ist.

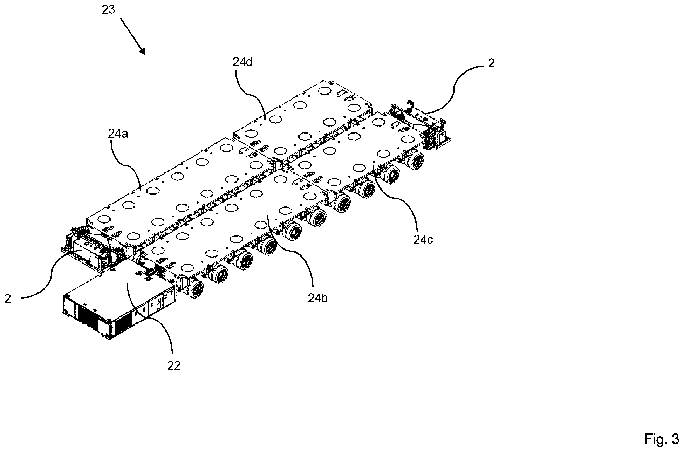

Fig. 3 zeigt ein Ausführungsbeispiel eines erfindungsgemäßen modularen Schwerlast-Transportfahrzeugs 23, das vier Module 24a, 24b, 24c, 24d umfasst, die jeweils als SPMT ausgebildet sind. Des Weiteren ist eine Antriebseinheit 22 an dem Modul 24b angeordnet, die einen Hydrauliktank und ein Leistungsaggregat umfasst. Des Weiteren weisen die Module 24a, 24b, 24c, 24d eine hydraulische Abstützung zur Variation der Höhe des Schwerlast-Transportfahrzeugs auf. An den Modulen 24a, 24c ist jeweils ein erfindungsgemäßes System mit einem Flüssigkeitstank 2 zum Ausgleich von Hydraulikflüssigkeit für die Antriebseinheit 22 befestigt. Dabei wird darauf hingewiesen, dass das Schwerlast-Transportfahrzeug 23 mehr oder weniger als vier Module 24a, 24b, 24c, 24d aufweisen kann. Des Weiteren könnte lediglich ein einziges System zum Ausgleich der Hydraulikflüssigkeit vorgesehen sein oder aber mehrere, je nach Größe des Schwerlast-Transportfahrzeugs 23 bzw. entsprechend der Anzahl von Modulen 24 und/oder Antriebseinheiten 22. Bezüglich der Funktion des erfindungsgemäßen Systems wird auf die Beschreibung der Fig. 1 und 2 sowie den allgemeinen Teil der Beschreibung verwiesen.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Steuereinheit
- 2: Flüssigkeitstank
- 3: Hydraulikflüssigkeit
- 4: Füllstandsensor
- 5: Datenverbindung
- 6: erste Hydraulikleitung
- 7: zweite Hydraulikleitung
- 8: gemeinsame Hydraulikleitung
- 9: Ventil
- 10: Steuerverbindung
- 11: Pumpeinrichtung
- 12: Hydropumpe
- 13: Hydromotor
- 14: Zuleitung
- 15: Ableitung
- 16: Steuerverbindung
- 17: Ventil
- 18: Rückschlagventil
- 19: Bypassleitung
- 20: Druckbegrenzungsventil
- 21: Schnittstelle
- 22: Antriebseinheit
- 23: Schwerlast-Transportfahrzeug
- 24a bis 24d: Modul

## Patentansprüche

1. System zum Ausgleich von Hydraulikflüssigkeit (3) für eine Antriebseinheit (22) eines Schwerlast-Transportfahrzeugs (23), insbesondere eines modularen Schwerlast-Transportfahrzeugs (23), mit einer Steuereinheit (1) und einem Flüssigkeitstank (2) mit mindestens einem Füllstandsensor (4), wobei an dem Flüssigkeitstank (2) mindestens eine Hydraulikleitung (6, 7, 8) zur Herstellung einer Hydraulikverbindung mit der Antriebseinheit (22) angeordnet ist und wobei eine über die Steuereinheit (1) betätigbare Pumpeinrichtung (11) zur Förderung von Hydraulikflüssigkeit (3) durch die Hydraulikleitung (6, 7, 8) angeordnet ist.

2. System nach Anspruch 1, **dadurch gekennzeichnet, dass** eine erste Hydraulikleitung (6) zur Förderung von Hydraulikflüssigkeit (3) von der Antriebseinheit (22) in den Flüssigkeitstank (2) und eine zweite Hydraulikleitung (7) zur Förderung von Hydraulikflüssigkeit (3) von dem Flüssigkeitstank (2) zu der Antriebseinheit (22) angeordnet sind.

3. System nach Anspruch 2, **dadurch gekennzeichnet, dass** die Pumpeinrichtung (11) mit der zweiten Hydraulikleitung (7) wirkverbunden ist.

4. System nach Anspruch 2 oder 3, **dadurch gekennzeichnet, dass** in der ersten Hydraulikleitung (6) ein, vorzugsweise über die Steuereinheit (1) betätigbares, Ventil angeordnet ist (9) und/oder dass in der zweiten Hydraulikleitung (7) ein, vorzugsweise über die Steuereinheit (1) betätigbares, Ventil (9) angeordnet ist.

5. System nach einem der Ansprüche 1 bis 4, **dadurch gekennzeichnet, dass** eine Energiequelle zum Betreiben der Pumpeinrichtung (11) angeordnet ist oder dass die Pumpeinrichtung (11) von der Antriebseinheit (22) mit Energie versorgbar ist.

6. System nach einem der Ansprüche 1 bis 5, **dadurch gekennzeichnet, dass** die Pumpeinrichtung (11) eine Hydropumpe (12) und einen die Hydropumpe (12) antreibbaren Hydromotor (13) aufweist.

7. System nach Anspruch 6, **dadurch gekennzeichnet, dass** der Hydromotor (13) über eine Hydraulikleitung (14, 15) mit der Antriebseinheit (22) verbindbar ist, so dass der Hydromotor (13) über die Antriebseinheit (22) antreibbar ist.

8. System nach einem der Ansprüche 1 bis 7, **dadurch gekennzeichnet, dass** die Steuereinheit (1) eine Datenverbindung (5) zu dem Füllstandsensor (4) aufweist und/oder eine Schnittstelle (21) zur Herstellung einer Datenverbindung (5) mit der Antriebseinheit (22) aufweist.

9. Verfahren zum Ausgleich von Hydraulikflüssigkeit (3) für eine Antriebseinheit (22) eines Schwerlast-Transportfahrzeugs (23), insbesondere für ein modulares Schwerlast-Transportfahrzeug (23), unter Nutzung eines Systems nach einem der Ansprüche 1 bis 8, wobei Hydraulikflüssigkeit (3) über eine Hydraulikleitung ( 6, 7, 8) in den Flüssigkeitstank (2) eingeleitet wird, wenn der von dem Füllstandsensor (4) ermittelte Füllstand unter einem Mindestfüllstand liegt und/oder wenn die Aufnahme von Hydraulikflüssigkeit (3) über eine Schnittstelle (21) angefordert wird, und wobei Hydraulikflüssigkeit (3) über eine Hydraulikleitung (6, 7, 8) aus dem Flüssigkeitstank (2) ausgeleitet wird, wenn der von dem Füllstandsensor (4) ermittelte Füllstand über einem Höchstfüllstand liegt und/oder wenn Hydraulikflüssigkeit (3) über eine Schnittstelle (21) angefordert wird.

10. Schwerlast-Transportfahrzeug (23), insbesondere modulares Schwerlast-Transportfahrzeug (23), mit einem System nach einem der Ansprüche 1 bis 8.

11. Schwerlast-Transportfahrzeug (23) nach Anspruch 10, **dadurch gekennzeichnet, dass** eine hydraulische Antriebseinheit (22) mit einem Hydrauliktank und einem Leistungsaggregat sowie eine hydraulische Abstützung zur Variation der Höhe des Schwerlast-Transportfahrzeugs (23) angeordnet sind.
